# FASCICULE DE BREVET EUROPEEN

(11) **EP 2 986 796 B1**
(45) Date de publication et mention de la délivrance du brevet: **21.11.2018**
(21) Numéro de dépôt: 14725225.8
(22) Date de dépôt: 16.04.2014
(51) Int. Cl.: E05C 21/00

(54) **DISPOSITIF POUR MAINTENIR UNE PORTIÈRE D'UN VÉHICULE AUTOMOBILE DANS UNE POSITION ENTREBÂILLÉE**
VORRICHTUNG ZUM HALTEN EINER KRAFTFAHRZEUGTÜR IN EINER HALBOFFENEN POSITION
DEVICE FOR HOLDING A MOTOR VEHICLE DOOR IN AN AJAR POSITION

(30) Priorité: 16.04.2013 FR 1353431; 11.06.2013 FR 1355362
(43) Date de publication de la demande: 24.02.2016
(73) Titulaire: Exsto Thermoplastics, 26100 Romans Sur Isere (FR)
(72) Inventeur: MOYART, Eloi, F-26270 Loriol (FR); BOURGEOIS, Olivier, F-38730 Le Pin (FR); PRETOT, Sébastien, F-38840 Saint Hilaire du Rosier (FR)
(74) Mandataire: Chevalier, Renaud Philippe
(86) Numéro de dépôt international: PCT/FR2014/050925
(87) Numéro de publication internationale: WO 2014/170605

(56) Documents cités:
- WO-A1-2006/018193
- DE-U1-202004 012 900
- FR-A1- 2 889 227
- FR-A1- 2 892 140
- FR-A1- 2 893 969
- FR-A1- 2 926 102

## Description

La présente invention concerne un dispositif pour maintenir une portière de véhicule automobile dans une position entrebâillée lors de la fabrication de ce véhicule automobile.

En particulier, mais non exclusivement, le dispositif selon l'invention trouve application lors d'une opération de traitement de la caisse de type peinture ou anti-corrosion.

Il est connu d'utiliser des dispositifs pour maintenir les éléments ouvrants, tels que les portières, le capot, ou le coffre d'un véhicule automobile en position entrebâillée lors de la fabrication de ce véhicule automobile.

Ainsi, les constructeurs s'affranchissent de tout problème de touché des éléments ouvrants contre les éléments de caisse et empêchent l'ouverture intempestive des éléments ouvrant pendant la fabrication.

Plus particulièrement, le document WO2006/018193 divulgue un dispositif comportant :
- un corps ;
- des languettes de fixation montées sur le corps et conçues pour être passées à travers une lumière ménagée dans un montant supérieur et sensiblement horizontal d'une portière ;
- un bras monté sur le corps et arqué pour prendre appui d'un premier côté de l'élément de toit et retenir la portière en position entrebâillée ; et
- une lèvre montée sur le corps et agencé pour prendre appui d'un second côté de l'élément de toit et empêcher la fermeture de la portière.

Un inconvénient de ce dispositif réside dans le fait que, lors d'une opération de peinture, la peinture s'accumule sur le bord de la portière et du dispositif. Ainsi, la peinture forme des gouttes qui s'écoulent depuis le dispositif sur une zone de la portière visible par l'utilisateur une fois la portière équipée. Par suite, l'esthétique du véhicule est dégradée.

En outre, le bras assurant la retenue de la portière en position entrebâillée est susceptible de frotter contre l'élément de toit. Des grains de plastique ou de métal générés par ces frottements peuvent se déposer sur des zones de la portière ou de la caisse visibles par l'utilisateur une fois le véhicule équipé. Ainsi, l'esthétique du véhicule est dégradé plus encore.

Il existe aussi les documents FR2889227, FR2926102 et FR2892104 décrivant des dispositifs pour maintenir une portière de véhicule automobile dans une position entrebâillée.

L'invention vise à remédier à tout ou partie de ces inconvénients.

L'invention concerne un dispositif selon la revendication 1.

Au sens de la présente description, une zone d'une portière est dite
« disposée à l'intérieur » du véhicule s'il celle-ci est protégée des fluides, tels que les intempéries, par des joints d'étanchéité, lorsque la portière est en position fermée.

Une zone est dite « disposée à l'extérieur » du véhicule s'il celle-ci n'est pas protégée des fluides, tels que les intempéries, par des joints d'étanchéité, lorsque la portière est en position fermée.

Le terme « monté » s'entend dans son sens le plus large, c'est-à-dire monté directement ou indirectement, de façon amovible ou non-amovible.

L'organe de retenue s'oppose au déplacement de la portière vers la position ouverte tandis que l'organe de butée s'oppose au déplacement de la portière vers la position fermée. Ainsi, la portière peut être maintenue en position entrebâillée lors d'une opération de traitement.

Contrairement au dispositif divulgué dans le document WO2006/018193, l'organe de butée du dispositif selon l'invention est distinct des moyens de fixation et s'étend à distance de la portière. Ainsi, l'organe de butée ne prend pas appui sur un bord de la portière. L'espace ménagé entre l'organe de butée et la portière permet de traiter la portière derrière l'organe de butée. En outre, le risque de coulures par accumulation de peinture sur l'organe de butée est réduit.

La zone de fixation de la portière est disposée à l'intérieur du véhicule. Ainsi, même si la zone de fixation n'est pas traitée lors de l'opération de traitement, cette zone de fixation n'est pas ou peu sujette à la corrosion.

Lorsque la zone de fixation de la portière est en outre disposée latéralement et centrée, la zone de fixation se trouve disposée latéralement ce qui limite le risque de vrillage de la portière et limite le risque de touché non souhaité en haut ou en bas de la portière.

En outre, l'élément de caisse en vis-à-vis de la zone de fixation, à savoir un montant de baie vertical, est généralement peu agressive. Ainsi, la quantité de grains susceptibles d'être produits par frottement de l'organe de retenue contre l'élément de caisse est minimisée.

Le dispositif selon l'invention peut comporter une ou plusieurs des caractéristiques suivantes.

Suivant une caractéristique, l'organe de butée prend la forme d'un bras arqué.
Suivant une autre caractéristique, l'organe de butée est agencé pour prendre appui contre une feuillure de l'élément de caisse destinée à recevoir un joint d'étanchéité.

Par conséquent, si lors de l'opération de traitement l'organe de butée prend appui contre la feuillure de l'élément de caisse, la partie de la feuillure non traitée est protégée de la corrosion par le joint d'échantéité.
Suivant une caractéristique, la portion de verrouillage du premier organe de verrouillage présente une face de glissement formant rampe contre laquelle est susceptible de glisser un bord de la lumière ménagée dans la portière, pour permettre le passage de la portion de verrouillage à travers cette lumière ; et
la portion de verrouillage du premier organe de verrouillage présente une face de butée susceptible de prendre appui contre la portière après être passée à travers ladite lumière, pour assurer la fixation du corps à la portière.

Suivant une possibilité, le premier organe de verrouillage est monté amovible sur le corps.

Suivant une autre possibilité, le premier organe de verrouillage est monté inamovible sur le corps, et est relié au corps par un organe de liaison élastiquement déformable.

De préférence, le dispositif comporte un organe de blocage conçu pour bloquer le premier organe de verrouillage en position verrouillée.

De préférence, l'organe de blocage présente une face de glissement formant rampe contre laquelle est susceptible de glisser la portion d'actionnement du premier organe de verrouillage lors d'un déplacement de sa position déverrouillée à sa position verrouillée ; et
l'organe de blocage présente une face de butée contre laquelle est susceptible de prendre appui la portion d'actionnement du premier organe de verrouillage en position verrouillée.

Dans une forme d'exécution, le dispositif comporte un second organe de verrouillage monté amovible sur le corps ;
le second organe de verrouillage présente une portion de verrouillage et une portion d'actionnement conçue pour être actionnée par un utilisateur de manière à déplacer le second organe de verrouillage entre:
- une position déverrouillée dans laquelle la portion de verrouillage du second organe de verrouillage est susceptible d'être passée à travers la lumière ménagée dans la portière ; et
- une position verrouillée dans laquelle la portion de verrouillage du second organe de verrouillage est susceptible de prendre appui contre la portière pour assurer la fixation du corps à la portière ;
le premier organe de verrouillage et le second organe de verrouillage sont reliés par une portion de liaison élastiquement déformable pour former une pince.

Suivant une caractéristique, le premier organe de verrouillage est pourvu d'un organe de blocage ;
le second organe de verrouillage est pourvu d'une ouverture agencée pour coopérer avec l'organe de blocage ;
l'organe de blocage présente une face de glissement formant rampe contre laquelle est susceptible de glisser un bord de l'ouverture ménagée dans le second organe de verrouillage, pour permettre le passage de l'organe de blocage à travers cette ouverture ; et
l'organe de blocage présente une face de butée susceptible de prendre appui contre le second organe de verrouillage après que l'organe de blocage soit passé à travers ladite ouverture, pour assurer le blocage du premier organe de verrouillage et du second organe de verrouillage en position verrouillée.

Dans une forme d'exécution, le premier organe de verrouillage présente une portion de liaison reliée au corps et susceptible de se déformer élastiquement pour déplacer le premier organe de verrouillage entre la position déverrouillée et la position verrouillée.

En variante de cette forme d'exécution, les moyens de fixation comprennent un second organe de verrouillage s'étendant sensiblement parallèlement au premier organe de verrouillage.

Dans une autre forme d'exécution, les moyens de fixation comprennent une platine montée sur le corps et pourvue d'une lumière, cette lumière présentant une section sensiblement identique à la section d'une lumière ménagée dans la portière ; et
le premier organe de verrouillage est monté amovible sur le corps et présente une portion d'actionnement conçue pour être actionnée par un utilisateur de manière à déplacer le premier organe de verrouillage entre :
- une position déverrouillée dans laquelle la portion de verrouillage du premier organe de verrouillage est susceptible d'être engagée à travers la lumière ménagée dans la platine et la lumière ménagée dans la portière ; et
- une position verrouillée dans laquelle la portion de verrouillage du premier organe de verrouillage est pivotée autour d'un axe, de préférence d'un quart de tour, pour prendre appui contre la portière et fixer le corps à la portière.

Suivant une caractéristique, l'axe est agencé pour s'étendre transversalement à la lumière ménagée dans la portière et à la lumière ménagée dans la platine.

Dans une forme d'exécution, la portière est pourvue d'au moins une lumière ;
les moyens de fixation comprennent une platine montée sur le corps, pourvue d'au moins une protubérance en forme générale de 'L', cette protubérance étant agencée pour être engagée transversalement dans une lumière de la portière puis translatée sensiblement parallèlement à la lumière de la portière, de manière à prendre appui contre la portière; et
les moyens de fixation comprennent un organe de verrouillage monté sur la platine, l'organe de verrouillage présentant une portion de verrouillage, une portion d'actionnement et une portion de liaison reliant la portion de verrouillage et la portion d'actionnement, l'organe de verrouillage étant élastiquement déformable entre :
- une position déverrouillée dans laquelle la portion de verrouillage autorise l'engagement de ladite protubérance dans ladite lumière de la portière ; et
- une position verrouillée dans laquelle la portion de verrouillage interdit le dégagement de ladite protubérance dans ladite lumière de la portière.

Dans une autre forme d'exécution, les moyens de fixation comprennent une platine montée sur le corps et pourvue d'un orifice ; et
les moyens de fixation comprennent une vis susceptible d'être engagée à travers l'orifice ménagé dans la platine et l'orifice ménagé dans la portière et boulonnée pour assurer la fixation du corps à la portière.

Suivant une caractéristique, les moyens de fixation comprennent un doigt conçu pour être engagé à travers un orifice ménagé dans la portière.

Suivant une autre caractéristique, le dispositif comporte des organes de stabilisation disposés de part et d'autre des moyens de fixation, chaque organe de stabilisation étant pourvu d'une platine agencée pour prendre appui contre la portière.

Suivant encore une autre caractéristique, l'organe de retenue peut être réalisé, au moins en partie, en un polymère dont la dureté est comprise entre 90 Shore échelle A et 60 Shore échelle D et dont la résistance à la déchirure mesurée selon la norme ISO 34-1 est supérieure à 70 kN/m.

Suivant une caractéristique, le dispositif est associé à un organe de protection (ou autrement dit une interface), par exemple en forme générale de 'U', prévu pour être monté sur une partie tranchante de l'élément de caisse, plus précisément sur un rebord tranchant de l'élément de caisse, et encore plus préférentiellement sur la feuillure de l'élément de caisse mentionnée ci-dessus, et contre lequel l'organe de butée peut prendre appui.

Dans un mode de réalisation de l'invention, l'organe de protection comprend un élément profilé comportant une base, une première paroi latérale et une deuxième paroi latérale qui délimitent ensemble un logement destiné à recevoir une partie tranchante de l'élément de caisse, de préférence la feuillure de l'élément de caisse, ladite première paroi latérale et/ou ladite deuxième paroi latérale présentant une élasticité radiale déterminée de manière à ce que la première paroi latérale et/ou la deuxième paroi latérale s'écartent l'une de l'autre pour disposer la partie tranchante de l'élément de caisse, de préférence la feuillure de l'élément de caisse, dans ledit logement puis qu'elles se rapprochent l'une de l'autre pour assurer le maintien de la partie tranchante de l'élément de caisse, de préférence la feuillure de l'élément de caisse, dans ledit logement de l'élément profilé.

En d'autres termes, l'interface recouvre la partie tranchante de l'élément de caisse, de préférence la feuillure de l'élément de caisse, et permet ainsi que l'organe de butée du dispositif selon l'invention ne soit plus en contact avec cette partie tranchante de l'élément de caisse, de préférence la feuillure de l'élément de caisse.

L'élasticité radiale des parois latérales de l'élément profilé permet ainsi la fixation de l'interface sur la partie tranchante de l'élément de caisse, de préférence la feuillure de l'élément de caisse. Cette fixation est aisée à mettre en oeuvre. L'interface (ou autrement dit l'organe de protection) est une pièce compacte, simple de conception et donc économique. De plus, le montage et le démontage de cette interface (ou autrement dit l'organe de protection) sont aisés à réaliser du fait de l'élasticité radiale des première et deuxièmes parois latérales de l'élément profilé.

De plus, l'interface (ou autrement dit l'organe de protection) permet parfaitement d'éviter les problèmes de grains détaillés ci-dessus.

En outre, cette interface (ou autrement dit l'organe de protection) peut être utilisée lorsque l'élément de caisse sur lequel elle est fixée ne comporte pas de renfort et qu'il est prévu après les opérations de peinture de disposer une pièce dans la zone où était fixée cette interface (autrement dit qu'il est prévu d'habiller la zone où se trouvait l'interface pendant les opérations de peinture) de manière à ce qu'on ne détecte pas l'absence de peinture dans cette zone où se situait l'interface (ou autrement dit l'organe de protection).

Cette interface (ou autrement dit l'organe de protection) peut aussi être utilisée si l'élément de caisse sur lequel elle est fixée pendant les opérations de peinture comprend un renfort (généralement non visible par le client final), et qu'il soit prévu ou non d'habiller ultérieurement ladite zone où se trouvait l'interface pendant les opérations de peinture. En effet, l'interface (ou autrement dit l'organe de protection) est alors fixée complètement sur le renfort pendant les opérations de peinture et ne dépasse pas de celui-ci de manière à ne pas laisser une zone d'absence de peinture visible par le client final une fois les opérations de peinture achevées.

De manière préférée, l'élément profilé présente une section transversale en U.

Selon un mode de réalisation de l'interface (ou autrement dit l'organe de protection), une des parois latérales de l'élément profilé comprend en outre au moins un moyen de préhension. Cela présente l'avantage de pouvoir mettre aisément en place l'interface et surtout de la récupérer facilement une fois les opérations de peinture achevées.

De manière avantageuse, une des parois latérales de l'élément profilé comprend en outre au moins un élément en saillie orienté du côté du logement de l'élément profilé. Cet élément en saillie est configuré pour être enfoncé ou clipsé dans un orifice qui est prévu dans la partie tranchante de l'élément de caisse, de préférence la feuillure de l'élément de caisse. Cet élément en saillie constitue un autre moyen de fixation de l'interface (ou autrement dit l'organe de protection) sur l'élément de caisse.

L'invention concerne également un kit qui comprend :
- au moins un dispositif pour maintenir une portière de véhicule automobile dans une position entrebâillée par rapport à un élément de caisse tel que décrit ci-dessus.
- au moins un organe de protection (ou autrement dit une interface) tel que décrit ci-dessus.

De manière préférée, l'organe de protection (ou autrement dit l'interface) comprend un élément profilé comportant une base, une première paroi latérale et une deuxième paroi latérale qui délimitent ensemble un logement destiné à recevoir une feuillure d'un élément de caisse, ladite première paroi latérale et/ou ladite deuxième paroi latérale présentant une élasticité radiale déterminée de manière à ce que la première paroi latérale et/ou la deuxième paroi latérale s'écartent l'une de l'autre pour disposer la feuillure de l'élément de caisse dans ledit logement puis qu'elles se rapprochent l'une de l'autre pour assurer le maintien de la feuillure de l'élément de caisse dans ledit logement de l'élément profilé.

Une des parois latérales de l'élément profilé peut comprendre en outre au moins un élément en saillie orienté du côté du logement de l'élément profilé.

L'invention concerne également un véhicule automobile comportant au moins une portière et un élément de caisse, caractérisé en ce qu'il est équipé d'un dispositif tel que présenté ci-avant.

Et de manière préférée, le véhicule automobile comprend en outre au moins un organe de protection (ou autrement dit une interface) tel que décrit ci-dessus.

L'invention sera mieux comprise à l'aide de la description qui suit, en référence au dessin schématique annexé représentant, à titre d'exemple, dix dispositifs pour maintenir une portière de véhicule automobile dans une position entrebâillée lors d'une opération de traitement selon l'invention.
Figure 1 est une représentation en perspective d'un premier dispositif vu de dos ;
Figure 2 est une représentation en perspective du dispositif de figure 1 vu de face et fixé sur une portière ;
Figure 3 est une représentation en perspective d'un deuxième dispositif vu de face ;
Figure 4 est une représentation en perspective d'un troisième dispositif vu de dos ;
Figure 5 est une représentation en perspective du dispositif de figure 4 vu de dos et fixé sur une portière ;
Figure 6 est une représentation en perspective d'un quatrième dispositif vu de dos ;
Figure 7 est une représentation en perspective du dispositif de figure 6 vu de dos et fixé sur une portière ;
Figure 8 est une représentation en perspective d'un cinquième dispositif vu de face et prêt à être fixé sur une portière ;
Figure 9 est une représentation en perspective du dispositif de figure 8 vu de dos et fixé sur la portière ;
Figure 10 est une représentation en perspective d'un sixième dispositif vu de face et prêt à être fixé sur une portière ;
Figure 11 est une représentation en perspective du dispositif de figure 10 vu de face ;
Figure 12 est une représentation en perspective du dispositif de figure 11 vu de dos et fixé sur la portière ;
Figure 13 est une représentation en perspective d'un organe de verrouillage en position déverrouillée ;
Figure 14 est une représentation en perspective de l'organe de verrouillage de figure 13 en position verrouillée ;
Figure 15 est une représentation en perspective d'un septième dispositif équipé de l'organe de verrouillage des figures 13 et 14 vu de dos et fixé sur une portière ;
Figure 16 est une représentation en perspective d'un huitième dispositif vu de dos ;
Figure 17 est une représentation en perspective d'un neuvième dispositif vu de dos ; et
Figure 18 est une représentation en perspective d'un dixième dispositif vu de dos.
   - La figure 19 est une vue en perspective d'un organe de protection (ou autrement dit une interface) selon un premier mode réalisation.
   - La figure 20 est une vue en perspective d'un organe de protection (ou autrement dit une interface) selon un deuxième mode de réalisation.
   - La figure 21 une vue en perspective d'un organe de protection (ou autrement dit une interface) selon un troisième mode de réalisation.

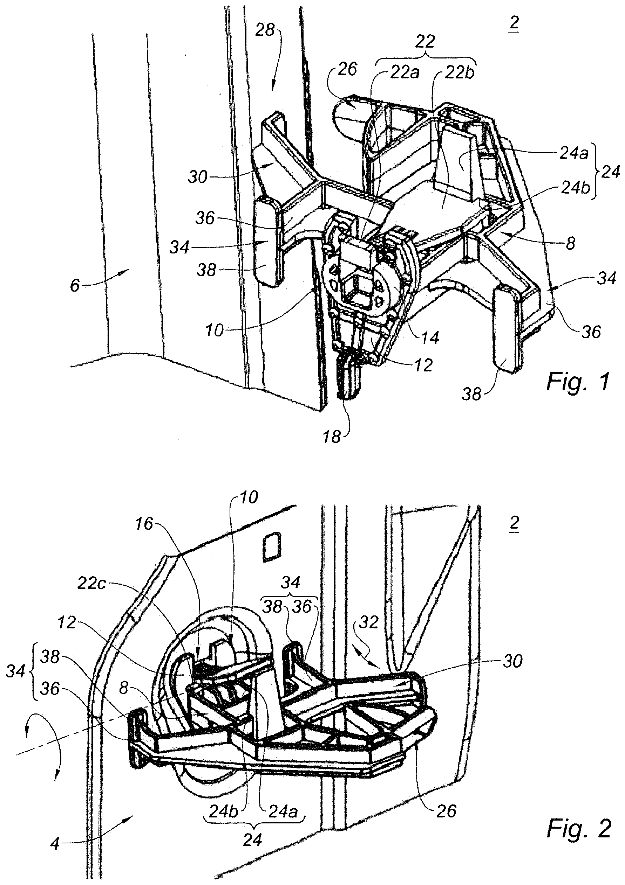

Les figures 1 et 2 représentent un dispositif 2 pour maintenir une portière 4 d'un véhicule automobile dans une position entrebâillée par rapport à un élément de caisse 6 lors d'une opération de traitement. L'élément de caisse 6 est un montant de baie vertical.

Le dispositif 2 comporte un corps 8 et des moyens de fixation 10 conçus pour fixer le corps 8 sur une zone de fixation de la portière 4.

Les moyens de fixation 10 comprennent une platine 12. Cette platine 12 est équipée d'une protubérance 14 prévue pour être engagée à travers une lumière 16 ménagée dans la portière 4. La platine 12 est par ailleurs équipée d'un doigt 18 prévu pour être engagé dans un orifice 20 ménagé dans la portière 4.

Les moyens de fixation 10 comprennent un organe de verrouillage 22 monté amovible sur le corps 8. L'organe de verrouillage 22 présente une portion de verrouillage 22a et une portion d'actionnement 22b disposées de part et d'autre d'un axe 22c. La portion de verrouillage 22a s'étend sensiblement perpendiculairement à la portion d'actionnement 22c. L'axe 22c s'étend parallèlement à la lumière 16 ménagée dans la portière 4. La portion d'actionnement 22b est conçue pour être actionnée par un utilisateur de manière à pivoter l'organe de verrouillage 22 entre :
- une position déverrouillée (représentée à la figure 2) dans laquelle la portion de verrouillage 22a est susceptible d'être passée à travers la lumière 16 ménagée dans la portière 4 ; et
- une position verrouillée (représentée à la figure 1) dans laquelle la portion de verrouillage 22a est susceptible de prendre appui contre la portière 4 pour assurer la fixation du corps 8.

Le dispositif 2 comporte un organe de blocage 24 conçu pour bloquer l'organe de verrouillage 22 en position verrouillée.

L'organe de blocage 24 présente une face de glissement 24a formant rampe contre laquelle est susceptible de glisser la portion d'actionnement 22b de l'organe de verrouillage 22 lors d'un déplacement de sa position déverrouillée à sa position verrouillée. L'organe de blocage 24 présente en outre une face de butée 24b contre laquelle est susceptible de prendre appui la portion d'actionnement 22b de l'organe de verrouillage 22 en position verrouillée.

Le dispositif 2 comporte un organe de retenue 26 monté sur le corps 8. L'organe de retenue 26 prend la forme d'un bras arqué. L'organe de retenue 26 est agencé pour prendre appui d'un premier côté d'une feuillure 28 de l'élément de caisse 6 et retenir la portière 4 en position entrebâillée.

Le dispositif 2 comporte un organe de butée 30 monté sur le corps 8 en regard de l'organe de retenue 26. L'organe de buté 30 prend la forme d'un bras arqué. L'organe de butée 30 est agencé pour prendre appui d'un second côté de la feuillure 28 de l'élément de caisse 6 et empêcher la fermeture de la portière 4.

L'organe de butée 30 s'étend à distance de la portière 4 (tel que représenté à la figure 2) de manière à délimiter un espace 32 entre l'organe de butée 30 et la portière 4. Ainsi, lors d'une opération de traitement, par exemple une opération de peinture, la portière 4 peut être peinte derrière l'organe de butée 30.

Le dispositif 2 comporte des organes de stabilisation 34 disposés de part et d'autre des moyens de fixation 10. Chaque organe de stabilisation 34 comprend un bras 36 portant une platine 38. Chaque platine 38 est agencée pour prendre appui contre la portière 4.

Un mode d'utilisation du dispositif 2 est maintenant décrit. Initialement, la portière 4 est en position ouverte. L'organe de verrouillage 22 et le corps 8 sont démontés l'un par rapport à l'autre.

Lors d'une première étape, un utilisateur fixe le corps 8 à la portière 4. A cette fin, l'utilisateur engage le doigt 18 dans l'orifice ménagé dans la portière 4 puis la protubérance 14 dans la lumière 16.

Puis, l'utilisateur rapporte l'organe de verrouillage 22 sur le corps 8 et positionne l'organe de verrouillage 22 en position déverrouillée.

Enfin, l'utilisateur pivote l'organe de verrouillage 22 autour de l'axe 22c jusqu'à ce que l'organe de blocage 24 bloque l'organe de verrouillage 22 en position verrouillée.

Lors d'une seconde étape, l'utilisateur déplace la portière 4 de sa position ouverte vers sa position entrebâillée. L'organe de retenue 26 prend appui contre le premier côté de la feuillure 28 de l'élément de caisse 6, fléchit, se déforme et prend appui contre le second côté de la feuillure 28. La portière 4 est en position entrebâillée.

Dans ces conditions, l'organe de retenue 26 interdit le déplacement de la portière 4 de la position entrebâillée vers la position ouverte. L'organe de butée interdit le déplacement de la portière 4 de la position entrebâillée vers la position fermée. Un léger débattement de la portière reste néanmoins possible.

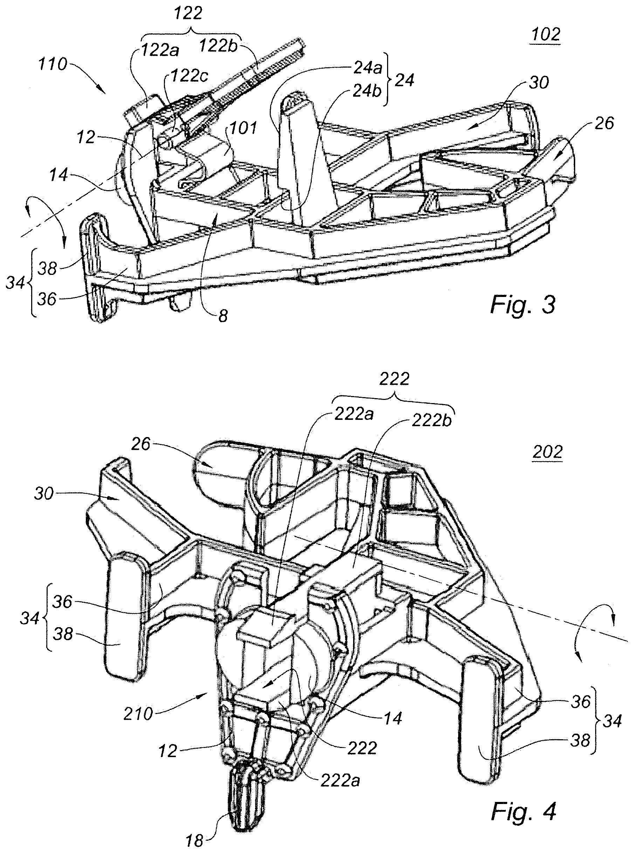

La figure 3 représente un dispositif 102 identique au dispositif 2 à l'exception que les moyens de fixation 10 sont remplacés par des moyens de fixation 110.

Les moyens de fixation 110 diffèrent des moyens de fixation 10 en ce qu'un organe de verrouillage 122 est monté inamovible au corps 8. L'organe de verrouillage 122 est relié au corps 8 par un organe de liaison 101 élastiquement déformable.

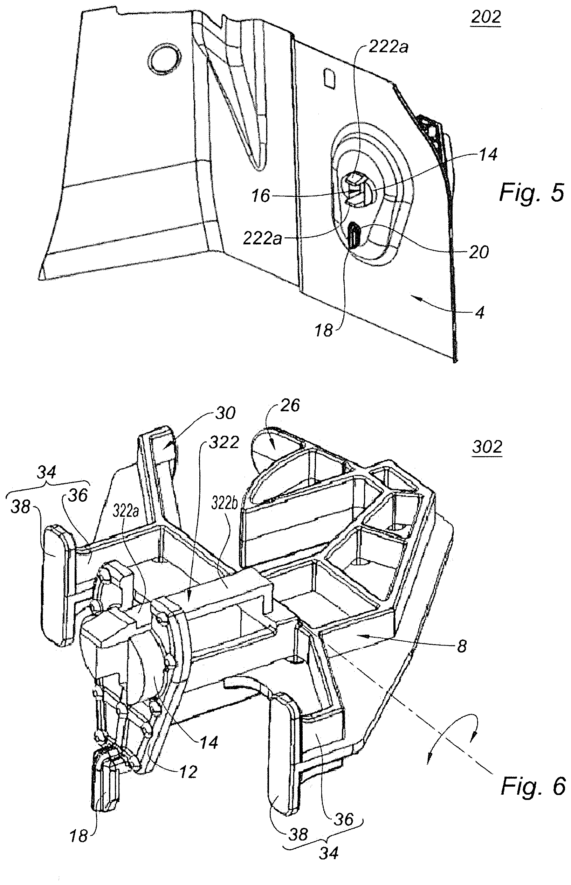

Les figures 4 et 5 représentent un dispositif 202 identique au dispositif 2 à l'exception que les moyens de fixation 10 sont remplacés par des moyens de fixation 210. Ces moyens de fixation 210 comprennent deux organes de verrouillage 222 s'étendant parallèlement l'un à l'autre.

Chaque organe de verrouillage 222 présente une portion de verrouillage 222a et une portion de liaison 222b relié au corps 8. Chaque organe de verrouillage est susceptible de se déformer élastiquement entre :
- une position déverrouillée dans laquelle la portion de verrouillage 222a est susceptible d'être passée à travers la lumière 16 ménagée dans la portière 4 ; et
- une position verrouillée (représentée à la figure 5) dans laquelle la portion de verrouillage 222a est susceptible de prendre appui contre la portière 4 pour assurer la fixation du corps 8.

Chaque portion de verrouillage 222a présente une face de glissement formant rampe contre laquelle est susceptible de glisser un bord de la lumière 16 ménagée dans la portière, pour permettre le passage de la portion de verrouillage à travers cette lumière 16.

Chaque portion de verrouillage 222a présente en outre une face de butée susceptible de prendre appui contre la portière 4 après être passée à travers ladite lumière, pour assurer la fixation du corps 8.

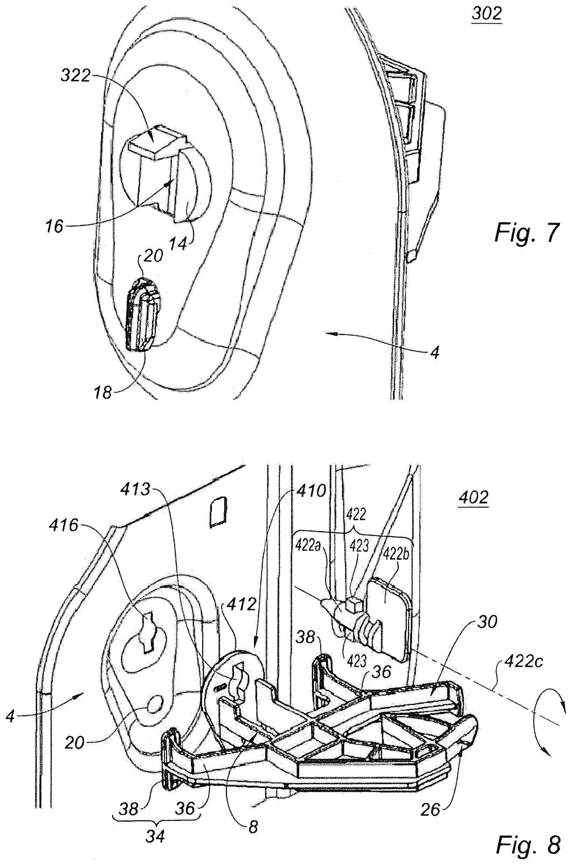

Les figures 6 et 7 représentent un dispositif 302 identique au dispositif 202 à l'exception que les moyens de fixation 210 sont remplacés par des moyens de fixation 310. Ces moyens de fixation 310 comprennent un unique organe de verrouillage 322. L'organe de verrouillage 322 est identique aux organes de verrouillage 222.

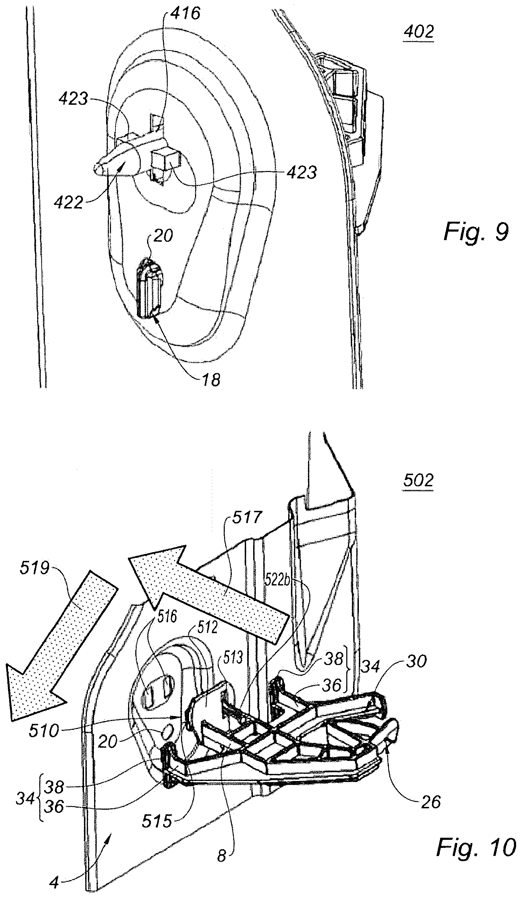

Les figures 8 et 9 représentent un dispositif 402 identique au dispositif 2 à l'exception que les moyens de fixation 10 sont remplacés par des moyens de fixation 410.

Les moyens de fixation 410 comprennent une platine 412 montée sur le corps et pourvue d'une lumière 413. La lumière 413 présente une section sensiblement identique à la section d'une lumière 416 ménagée dans la portière 4.

Les moyens de fixation 410 comprennent un organe de verrouillage 422 monté amovible sur le corps 8. L'organe de verrouillage 422 présente une portion de verrouillage 422a pourvue de plots 423 diamétralement opposés et une portion d'actionnement 422b. La portion d'actionnement 422b est conçue pour être actionnée par un utilisateur de manière à déplacer l'organe de verrouillage 422 entre :
- une position déverrouillée (représentée à la figure 8) dans laquelle la portion de verrouillage 422a de l'organe de verrouillage 422 est susceptible d'être engagée à travers la lumière 413 ménagée dans la platine 412 et la lumière 416 ménagée dans la portière 4 ; et
- une position verrouillée (représentée à la figure 9) dans laquelle la portion de verrouillage 422a de l'organe de verrouillage 422 est pivotée d'un quart de tour autour d'un axe 422c pour que les plots 423 de la portion de verrouillage 422a prennent appui contre la portière 4 et fixent le corps 8 à la portière 4. L'axe 422c s'étend transversalement à la lumière 413 ménagée dans la platine 412 et à la lumière 416 ménagée dans la portière 4.

Les figures 10 à 12 représentent un dispositif 502 identique au dispositif 2 à l'exception que les moyens de fixation 10 sont remplacés par des moyens de fixation 510.

Les moyens de fixation 510 comprennent une platine 512 montée sur le corps 8. La platine 512 est pourvue d'une lumière 513 et de deux protubérances 515 en forme générale de 'L'. Chaque protubérance 515 est agencée pour être engagée dans une lumière 516 de même section ménagée dans la portière 4.

Les moyens de fixation 510 comprennent un organe de verrouillage 522 monté sur la platine 512. L'organe de verrouillage 522 présente une portion de verrouillage 522a, une portion d'actionnement 522b et une portion de liaison (non représentée) reliant la portion de verrouillage 522a et la portion d'actionnement 522b. La portion de liaison s'étend en travers de la lumière 513 dans le plan de la platine 512.

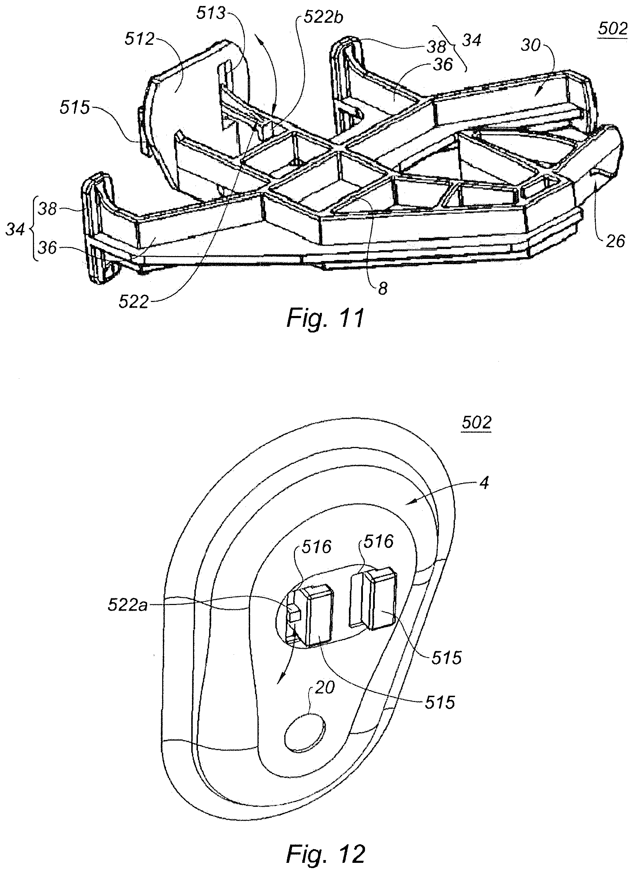

L'organe de verrouillage 522 est élastiquement déformable entre :
- une position déverrouillée (non représentée) dans laquelle la portion d'actionnement 522b est soulevée par un utilisateur et la portion de verrouillage 522a est reculée ; et
- une position verrouillée (représentée à la figure 12) dans laquelle la portion d'actionnement 522b est relâchée par l'utilisateur et la portion de verrouillage 522a est avancée.

En position déverrouillée, les protubérances 515 peuvent être positionnées dans les lumières 516. Les protubérances 515 sont engagées dans les lumières 516 selon un axe 517 transversal aux lumières 516. Puis, les protubérances 515 sont translatées dans les lumières 516 selon un axe 519 parallèle aux lumières 516. Les protubérances 515 prennent appui contre la portière 4.

En position verrouillée (représentée à la figure 12), la portion de verrouillage 522a est avancée et engagée dans une des lumières 516 interdisant le dégagement de la protubérance 515 reçue dans cette lumière 516. Ainsi, la fixation du corps 8 à la portière 4 est assurée.

Les moyens de fixation 510 diffèrent enfin en ce que le doigt 18 est omis.

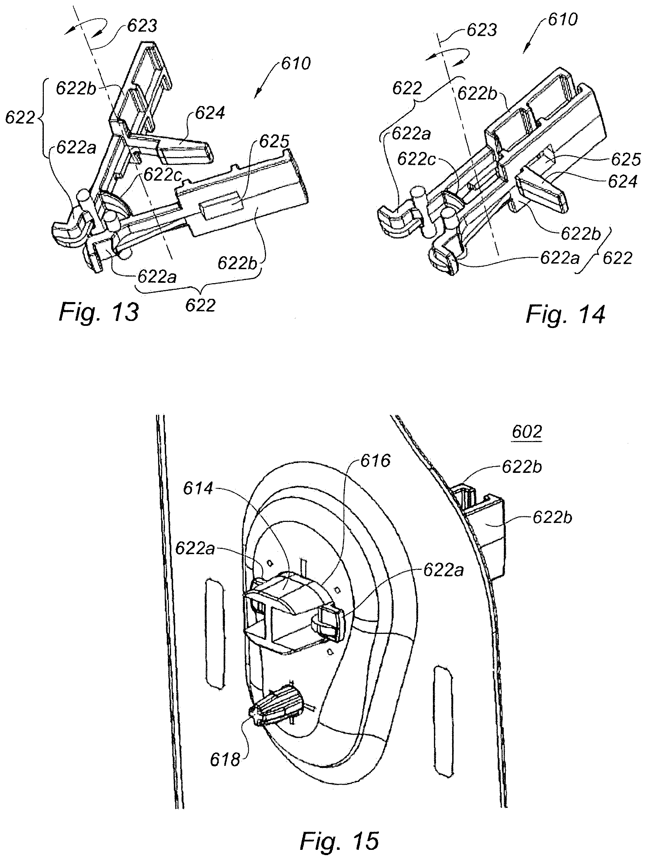

Les figures 13 à 15 représentent un dispositif 602 identique au dispositif 2 à l'exception que les moyens de fixation 10 sont remplacés par des moyens de fixation 610.

Les moyens de fixation 610 comprennent des organes de verrouillages 622 agencés à la manière d'une pince. Chaque organe de verrouillage 622 présente une portion de verrouillage 622a et une portion d'actionnement 622b. Les organes de verrouillage 622 sont reliés par une portion de liaison 622c élastiquement déformable.

Les portions d'actionnement 622b sont conçues pour être actionnées par un utilisateur de manière à pivoter les organes de verrouillage 622 autour d'un axe 623 entre:
- une position déverrouillée (représentée à la figure 13) dans laquelle les portions de verrouillage 622a sont susceptibles d'être passées à travers une lumière 616 ménagée dans la portière 4 simultanément à une protubérance 614, ici de section oblongue; et
- une position verrouillée (représentée aux figures 14 et 15) dans laquelle les portions de verrouillage 622a prennent appui contre la portière 4 pour assurer la fixation du corps 8.

Un des organes de verrouillage 622 est pourvu d'un organe de blocage 624 et l'autre des organes de verrouillage 622 est pourvu d'une ouverture 625 agencée pour coopérer avec l'organe de blocage 624. Ainsi, les organes de verrouillages 622 peuvent être bloqués en position verrouillée.

L'organe de blocage 624 présente une face de glissement formant rampe contre laquelle est susceptible de glisser un bord de l'ouverture 625 lors du passage de l'organe de blocage 624 à travers cette ouverture 625.

L'organe de blocage 624 présente une face de butée susceptible de prendre appui contre l'organe de verrouillage 622 pourvu de l'ouverture 625 après que l'organe de blocage 624 soit passé à travers cette ouverture 625.

Enfin, les moyens de fixation 610 comprennent un doigt 618 dont la section forme un '+'. En variante, le doigt peut présente une forme de tronc de cône afin de faciliter son insertion.

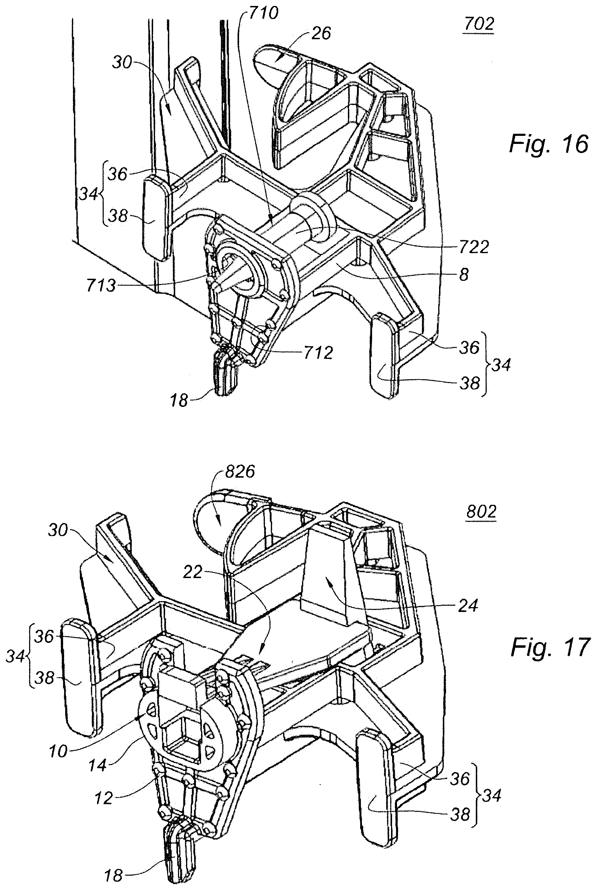

La figure 16 représente un dispositif 702 identique au dispositif 2 à l'exception que les moyens de fixation 10 sont remplacés par des moyens de fixation 710.

Les moyens de fixation 710 comprennent une platine 712 montée sur le corps 8 et pourvue d'un orifice 713.

Les moyens de fixation 710 comprennent en outre une vis 722 susceptible d'être engagée à travers l'orifice 713 ménagé dans la platine 712 et l'orifice ménagé dans la portière 4, puis boulonnée pour assurer la fixation du corps 8 à la portière 4. Le terme « vis » s'entend d'une tige filetée pourvue d'une tête à une extrémité.

La figure 17 représente un dispositif 802 identique au dispositif 2 à l'exception du fait que l'organe de retenue 26 est remplacé par un organe de retenue 826. L'organe de retenue 826 est réalisé en partie en un polymère dont la dureté est comprise entre 90 Shore échelle A et 60 Shore échelle D et dont la résistance à la déchirure mesurée selon la norme ISO 34-1 est supérieure à 70 kN/m.

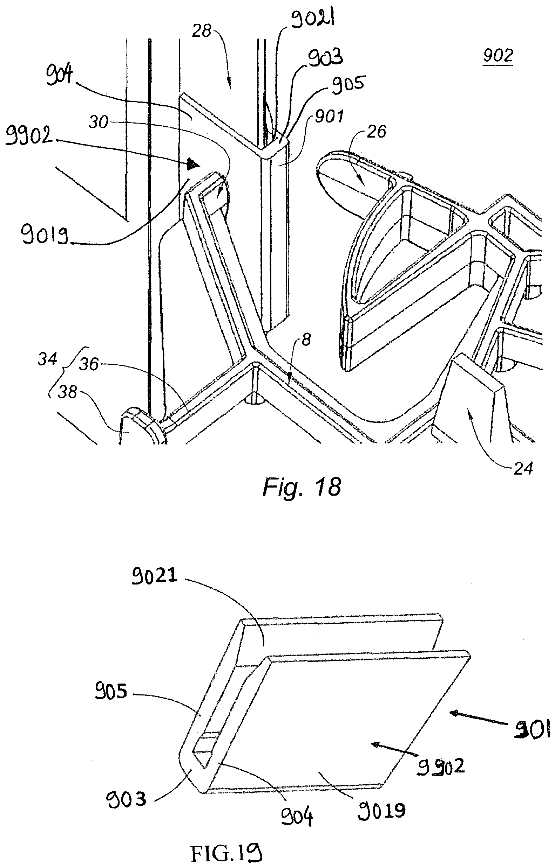

La figure 18 représente un dispositif 902 identique au dispositif 2 à l'exception du fait qu'il est associé à un organe de protection 901 (ou autrement dit une interface), en forme générale de 'U', monté sur la feuillure 28 de l'élément de caisse 6 et contre lequel l'organe de butée 30 peut prendre appui.

La figure 19 représente l'organe de protection (ou autrement dit l'interface) 901 qui est visible sur la figure 18. Il s'agit d'un premier mode de réalisation de l'organe de protection 901. Il comprend un corps 9902 qui se présente sous la forme d'un élément profilé 9019. L'élément profilé 9019 comporte une base 903, une première paroi latérale 904 et une deuxième paroi latérale 905. Les surfaces internes de la base 903, de la première paroi latérale 904 et de la deuxième paroi latérale 905 délimitent un logement 9021 destiné à recevoir la feuillure 28 de l'élément de caisse 6, à savoir une partie tranchante de l'élément de caisse 6. L'élément profilé 9019 a une section transversale en U. La première paroi latérale 904 et la deuxième paroi latérale 905 présentent chacune une élasticité radiale.

Comme cela est visible sur la figure 18, l'organe de butée 30 prend appui contre la première paroi latérale 904 de l'organe de protection (ou autrement dit l'interface) 901. L'organe de protection 901 est ainsi une interface de protection.

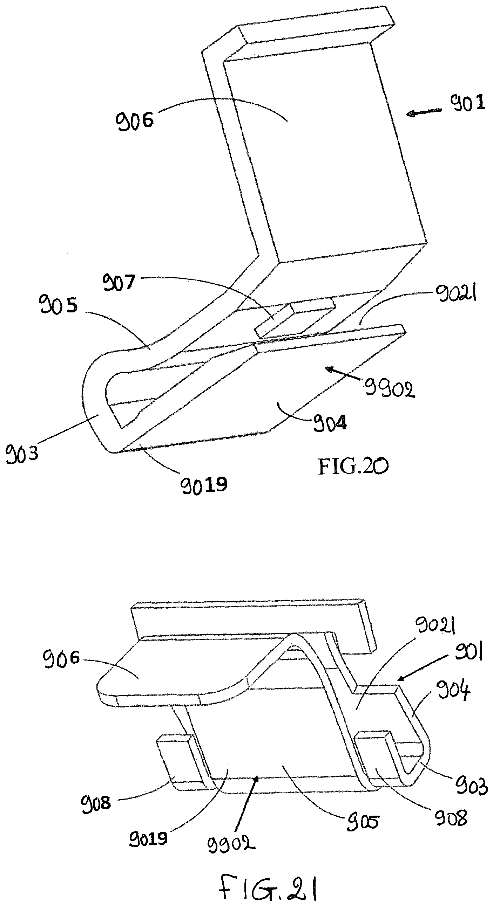

La figure 20 représente un organe de protection (ou autrement dit une interface) 901 dont le corps 9902 se présente aussi sous la forme d'un élément profilé 9019. Cet organe de protection 901 représenté à la figure 20 comporte toutes les caractéristiques décrites pour l'organe de protection 901 de la figure 19 et il comprend en outre un élément de préhension 906 qui aide à démonter l'organe de protection 901 à l'issue des opérations de peinture de la feuillure 28 de l'élément de caisse 6 sur lequel il a été fixé.

L'organe de protection 901 comprend sur sa deuxième paroi latérale 905 un élément en saillie 907 destiné à être enfoncé ou clipsé dans un trou de l'élément de caisse 6 qui est non visible sur les figures, afin de contribuer à la fixation de l'organe de protection 901 sur l'élément de caisse 6.

L'élément profilé 9019 représenté aux figures 19 et 20 est réalisé en un matériau plastique.

La figure 21 représente un autre mode de réalisation de l'organe de protection 901 qui est réalisé en un matériau métallique. Le corps 9902 se présente aussi sous la forme d'un élément profilé 9019. Des renforts 908 sont connectés à l'élément profilé 9019. Cet organe de protection 901 comporte aussi un moyen de préhension 906.

Comme il va de soi, l'invention ne se limite pas aux seules formes d'exécution présentées ci-avant, elle en embrasse au contraire toutes les variantes de réalisation.

## Revendications

1. Dispositif (2 ; 102 ; 202 ; 302 ; 402 ; 502 ; 602 ; 702 ; 802 ; 902) pour maintenir une portière (4) de véhicule automobile dans une position entrebâillée par rapport à un élément de caisse (6) lors de la fabrication de ce véhicule automobile, comportant :
- un corps (8) ;
- des moyens de fixation (10; 110; 210; 310 ; 410; 510; 610 ; 710) conçus pour fixer le corps (8) sur la portière (4) sur une zone de fixation disposée à l'intérieur du véhicule ; comprenant au moins un premier organe de verrouillage (22 ; 122 ; 222 ; 322; 422; 522; 622) monté sur le corps 8, le premier organe de verrouillage (22; 122; 222; 322; 422 ; 522 ; 622) présentant une portion de verrouillage (22a ; 122a ; 222a ; 322a ; 422a ; 522a ; 622a) et étant déplaçable entre :
- une position déverrouillée dans laquelle la portion de verrouillage (22a ; 122a ; 222a ; 322a ; 422a ; 522a ; 622a) est susceptible d'être passée à travers une lumière ménagée dans la portière (4) ; et
- une position verrouillée dans laquelle la portion de verrouillage (22a ; 122a ; 222a ; 322a ; 422a ; 522a ; 622a) est susceptible de prendre appui contre la portière (4) pour assurer la fixation du corps (8) à la portière (4) ;
le premier organe de verrouillage (22; 122 ; 402 ; 522) présentant une portion d'actionnement (22b; 122b; 402b; 522b) conçue pour être actionnée par un utilisateur de manière à déplacer le premier organe de verrouillage (22; 122; 402; 522) entre la position déverrouillée et la position verrouillée, ou inversement ;
- un organe de retenue (26 ; 826) monté sur le corps (8) et agencé pour prendre appui d'un premier côté de l'élément de caisse (6) et retenir la portière (4) en position entrebâillée ; et
- un organe de butée (30) monté sur le corps (8) et agencé pour s'étendre à distance de la portière (4) de manière à délimiter un espace (32) entre l'organe de butée (30) et la portière (4), l'organe de butée (30) étant agencé pour prendre appui d'un second côté de l'élément de caisse (6) et empêcher la fermeture de la portière (4) ;
**caractérisé en ce que** le premier organe de verrouillage est monté pivotant autour d'un axe (22c; 122c) agencé pour s'étendre parallèlement à la lumière ménagée dans la portière (4) ; et
**en ce que** la portion de verrouillage (22a ; 122a) et la portion d'actionnement (22b ; 122b) du premier organe de verrouillage (22 ; 122) s'étendent de part et d'autre de l'axe (22c ; 122c).

2. Dispositif (2 ; 102 ; 202 ; 302 ; 402 ; 502 ; 602 ; 702 ; 802 ; 902) selon la revendication 1, **caractérisé en ce que** l'organe de butée (30) prend la forme d'un bras arqué.

3. Dispositif (2 ; 102 ; 202 ; 302 ; 402 ; 502 ; 602 ; 702 ; 802 ; 902) selon l'une quelconque des revendications 1 ou 2, **caractérisé en ce que** l'organe de butée (30) est agencé pour prendre appui contre une feuillure (28) de l'élément de caisse (6) destinée à recevoir un joint d'étanchéité.

4. Dispositif (202 ; 302 ; 602) selon l'une des revendications précédentes, **caractérisé en ce que** la portion de verrouillage (222a ; 322a ; 622a) du premier organe de verrouillage (222 ; 322 ; 622) présente une face de glissement formant rampe contre laquelle est susceptible de glisser un bord de la lumière ménagée dans la portière (4), pour permettre le passage de la portion de verrouillage à travers cette lumière ; et
**en ce que** la portion de verrouillage (222a ; 322a ; 622a) du premier organe de verrouillage présente une face de butée susceptible de prendre appui contre la portière après être passée à travers ladite lumière, pour assurer la fixation du corps (8) à la portière (4).

5. Dispositif (2 ; 102 ; 602 ; 802 ; 902) selon l'une quelconque des revendications précédentes, **caractérisé en ce qu'**il comporte un organe de blocage (24 ; 624) conçu pour bloquer le premier organe de verrouillage (22 ; 122 ; 622) en position verrouillée.

6. Dispositif (602) selon l'une quelconque des revendications précédentes, **caractérisé en ce qu'**il comporte un second organe de verrouillage (622) monté amovible sur le corps ;
**en ce que** le second organe de verrouillage (622) présente une portion de verrouillage (622a) et une portion d'actionnement (622b) conçue pour être actionnée par un utilisateur de manière à déplacer le second organe de verrouillage (622) entre:
- une position déverrouillée dans laquelle la portion de verrouillage (622a) du second organe de verrouillage (622) est susceptible d'être passée à travers la lumière ménagée dans la portière (4) ; et
- une position verrouillée dans laquelle la portion de verrouillage (622a) du second organe de verrouillage (622) est susceptible de prendre appui contre la portière (4) pour assurer la fixation du corps (8) à la portière (4) ;
**en ce que** le premier organe de verrouillage et le second organe de verrouillage (622) sont reliés par une portion de liaison (622c) élastiquement déformable pour former une pince.

7. Dispositif (202 ; 302) selon l'une quelconque des revendications 1 ou4, **caractérisé en ce que** le premier organe de verrouillage (222 ; 322) présente une portion de liaison (222b ; 322b) relié au corps (8) et susceptible de se déformer élastiquement pour déplacer le premier organe de verrouillage (222 ; 322) entre la position déverrouillée et la position verrouillée.

8. Dispositif (202) selon la revendication 7, **caractérisé en ce que** les moyens de fixation comprennent un second organe de verrouillage (222) s'étendant sensiblement parallèlement au premier organe de verrouillage (222).

9. Dispositif (402) selon la revendication1, **caractérisé en ce que** les moyens de fixation (410) comprennent une platine (412) montée sur le corps (8) et pourvue d'une lumière (413), cette lumière (413) présentant une section sensiblement identique à la section d'une lumière (416) ménagée dans la portière (4) ; et
**en ce que** le premier organe de verrouillage (422) est monté amovible sur le corps (8) et présente une portion d'actionnement (422b) conçue pour être actionnée par un utilisateur de manière à déplacer le premier organe de verrouillage (422) entre :
- une position déverrouillée dans laquelle la portion de verrouillage (422a) du premier organe de verrouillage (422) est susceptible d'être engagée à travers la lumière (413) ménagée dans la platine (412) et la lumière (416) ménagée dans la portière (4) ; et
- une position verrouillée dans laquelle la portion de verrouillage (422a) du premier organe de verrouillage (422) est pivotée autour d'un axe (422c), de préférence d'un quart de tour, pour prendre appui contre la portière (4) et fixer le corps (8) à la portière (4).

10. Dispositif (402) selon la revendication9, **caractérisé en ce que** l'axe (422c) est agencé pour s'étendre transversalement à la lumière (41) ménagée dans la portière (4) et à la lumière (416) ménagée dans la platine (412).

11. Dispositif (502) selon l'une quelconque des revendications 1 à 3, **caractérisé en ce que** la portière est pourvue d'au moins une lumière ;
**en ce que** les moyens de fixation (510) comprennent une platine (512) montée sur le corps (8), pourvue d'au moins une protubérance (515) en forme générale de 'L', cette protubérance (515) étant agencée pour être engagée transversalement dans une lumière (516) de la portière (4) puis translatée sensiblement parallèlement à la lumière (516) de la portière, de manière à prendre appui contre la portière (4); et
**en ce que** les moyens de fixation (510) comprennent un organe de verrouillage (522) monté sur la platine (512), l'organe de verrouillage (522) présentant une portion de verrouillage (522a), une portion d'actionnement (522b) et une portion de liaison reliant la portion de verrouillage (522a) et la portion d'actionnement (522b), l'organe de verrouillage (522) étant élastiquement déformable entre :
- une position déverrouillée dans laquelle la portion de verrouillage (522a) autorise l'engagement de ladite protubérance (515) dans ladite lumière (516) de la portière (4) ; et
- une position verrouillée dans laquelle la portion de verrouillage (522a) interdit le dégagement de ladite protubérance (515) dans ladite lumière (516) de la portière (4).

12. Dispositif (702) selon l'une quelconque des revendications 1 à 3, **caractérisé en ce que** les moyens de fixation (710) comprennent une platine (712) montée sur le corps (8) et pourvue d'un orifice (713) ; et
**en ce que** les moyens de fixation (710) comprennent une vis (722) susceptible d'être engagée à travers l'orifice (713) ménagé dans la platine et l'orifice ménagé dans la portière (4) et boulonnée pour assurer la fixation du corps (8) à la portière (4).

13. Kit comprenant :
- au moins un dispositif (2 ; 102 ; 202 ; 302 ; 402 ; 502 ; 602 ; 702 ; 802 ; 902) selon l'une quelconque des revendications 1 à12.
- au moins un organe de protection (901).

14. Kit selon la revendication 13, **caractérisé en ce que** l'organe de protection (901) comprend un élément profilé (9019) comportant une base (903), une première paroi latérale (904) et une deuxième paroi latérale (905) qui délimitent ensemble un logement (9021) destiné à recevoir une feuillure (28) d'un élément de caisse (6), ladite première paroi latérale (904) et/ou ladite deuxième paroi latérale (905) présentant une élasticité radiale déterminée de manière à ce que la première paroi latérale (904) et/ou la deuxième paroi latérale (905) s'écartent l'une de l'autre pour disposer la feuillure (28) de l'élément de caisse (6) dans ledit logement (9021) puis qu'elles se rapprochent l'une de l'autre pour assurer le maintien de la feuillure (28) de l'élément de caisse (6) dans ledit logement (9021) de l'élément profilé (9019).

15. Kit selon la revendication 14, **caractérisé en ce qu'**une des parois latérales (904,905) de l'élément profilé (9019) comprend en outre au moins un élément en saillie (907) orienté du côté du logement (9021) de l'élément profilé (9019).

16. Véhicule automobile comportant au moins une portière et un élément de caisse (6), **caractérisé en ce qu'**il est équipé d'un dispositif (2 ; 102 ; 202 ; 302 ; 402 ; 502 ; 602 ; 702 ; 802 ; 902) selon l'une quelconque des revendications 1 à 12.

17. Véhicule automobile selon la revendication 16, **caractérisé en ce qu'**il comprend en outre au moins un organe de protection (901).

## Patentansprüche

1. Vorrichtung (2; 102 ; 202; 302; 402; 502; 602 ; 702; 802 ; 902), um eine Tür (4) eines Kraftfahrzeugs, bei der Herstellung dieses Kraftfahrzeugs, in einer einen Spalt breit offenen Position im Verhältnis zu einem Karosserieelement (6) zu halten, welche beinhaltet:
- einen Korpus (8);
- Befestigungsmittel (10; 110; 210; 310; 410; 510; 610; 710), konzipiert, um den Korpus (8) an der Tür (4) in einer Befestigungszone zu befestigen, die im Inneren des Fahrzeugs angeordnet ist; umfassend mindestens ein erstes Verriegelungsorgan (22; 122; 222; 322; 422; 522; 622), das auf dem Korpus 8 montiert ist, wobei das ein erste Verriegelungsorgan (22; 122; 222; 322; 422; 522; 622) einen Verriegelungsabschnitt (22a; 122a; 222a; 322a; 422a; 522a; 622a) aufweist und verschiebbar ist zwischen:
- einer entriegelten Position, in der der Verriegelungsabschnitt (22a; 122a; 222a; 322a; 422a; 522a; 622a) in der Lage ist, durch eine Öffnung durchgelassen zu werden, welche in der Tür (4) ausgeführt ist; und
- einer verriegelten Position, in welcher der Verriegelungsabschnitt (22a; 122a; 222a; 322a; 422a; 522a; 622a) in der Lage ist, sich an der Tür (4) anzulegen, um für die Befestigung des Korpus (8) an der Tür (4) zu sorgen;
wobei das erste Verriegelungsorgan (22; 122; 402; 522) einen Betätigungsabschnitt (22b; 122b; 402b; 522b) aufweist, konzipiert, um durch einen Benutzer derart betätigt zu werden, um das erste Verriegelungsorgan (22; 122; 402; 522) zwischen der entriegelten Position und der verriegelten Position, oder umgekehrt, zu verschieben;
- ein Rückhalteorgan (26; 826), das auf dem Korpus (8) montiert und angeordnet ist, um sich an einer ersten Seite des Karosserieelements (6) anzulegen und die Tür (4) in einer einen Spalt breit offenen Position zurückzuhalten; und
- ein Anschlagorgan (30), das auf dem Korpus (8) montiert und angeordnet ist, um sich auf Abstand zur Tür (4) derart zu erstrecken, um einen Raum (32) zwischen dem Anschlagorgan (30) und der Tür (4) einzugrenzen, wobei das Anschlagorgan (30) angeordnet ist, um sich an einer zweiten Seite des Karosserieelements (6) anzulegen und das Schließen der Tür (4) zu verhindern;
**dadurch gekennzeichnet, dass** das erste Verriegelungsorgan um eine Achse (22c; 122c) schwenkbar montiert ist, die angeordnet ist, um sich parallel zu der Öffnung zu erstrecken, welche in der Tür (4) ausgeführt ist; und
dadurch, dass sich der Verriegelungsabschnitt (22a; 122a) und der Betätigungsabschnitt (22b; 122b) des ersten Verriegelungsorgans (22; 122) beiderseits der Achse (22c; 122c) erstrecken.

2. Vorrichtung (2; 102 ; 202; 302; 402; 502; 602 ; 702; 802 ; 902) nach Anspruch 1, **dadurch gekennzeichnet, dass** das Anschlagorgan (30) die Form eines bogenförmigen Arms annimmt.

3. Vorrichtung (2; 102 ; 202; 302; 402; 502; 602; 702; 802; 902) nach einem der Ansprüche 1 oder 2, **dadurch gekennzeichnet, dass** das Anschlagorgan (30) angeordnet ist, um sich an einem Falz (28) des Karosserieelements (6) anzulegen, welcher dazu bestimmt ist, eine Dichtung aufzunehmen.

4. Vorrichtung (202; 302; 602) nach einem der vorstehenden Ansprüche, **dadurch gekennzeichnet, dass** der Verriegelungsabschnitt (222a; 322a; 622a) des ersten Verriegelungsorgans (222; 322; 622) eine Gleitfläche aufweist, welche eine Rampe bildet, gegen die ein Rand der Öffnung, welche in der Tür (4) ausgeführt ist, in der Lage ist zu gleiten, um den Durchlass des Verriegelungsabschnitts durch diese Öffnung hindurch zu ermöglichen; und
dadurch, dass der Verriegelungsabschnitt (222a; 322a; 622a) des ersten Verriegelungsorgans eine Anschlagfläche aufweist, die in der Lage ist, sich an der Tür anzulegen, nachdem er durch die Öffnung durchgelassen wurde, um für die Befestigung des Korpus (8) an der Tür (4) zu sorgen.

5. Vorrichtung (2; 102; 602; 802; 902) nach einem der vorstehenden Ansprüche, **dadurch gekennzeichnet, dass** sie ein Blockierorgan (24; 624) beinhaltet, konzipiert, um das erste Verriegelungsorgan (22; 122; 622) in der verriegelten Position zu blockieren.

6. Vorrichtung (602) nach einem der vorstehenden Ansprüche, **dadurch gekennzeichnet, dass** sie ein zweites Verriegelungsorgan (622) beinhaltet, das abnehmbar an dem Korpus montiert ist;
dadurch, dass das zweite Verriegelungsorgan (622) einen Verriegelungsabschnitt (622a) und einen Betätigungsabschnitt (622b) aufweist, der konzipiert ist, um durch einen Benutzer derart betätigt zu werden, um das zweite Verriegelungsorgan (622) zu verschieben, zwischen:
- einer entriegelten Position, in der der Verriegelungsabschnitt (622a) des zweiten Verriegelungsorgans (622) in der Lage ist, durch eine Öffnung durchgelassen zu werden, welche in der Tür (4) ausgeführt ist; und
- einer verriegelten Position, in der der Verriegelungsabschnitt (622a) des zweiten Verriegelungsorgans (622) in der Lage ist, sich an der Tür (4) anzulegen, um für die Befestigung des Korpus (8) an der Tür (4) zu sorgen;
dadurch, dass das erste Verriegelungsorgan und das zweite Verriegelungsorgan (622) durch einen elastisch verformbaren Verbindungsabschnitt (622c) verbunden sind, um eine Zange zu bilden.

7. Vorrichtung (202; 302) nach einem der Ansprüche 1 oder 4, **dadurch gekennzeichnet, dass** das erste Verriegelungsorgan (222; 322) einen Verbindungsabschnitt (222b; 322b) aufweist, mit dem Korpus (8) verbunden und in der Lage ist, sich elastisch zu verformen, um das erste Verriegelungsorgan (222; 322) zwischen der entriegelten Position und der verriegelten Position zu verschieben.

8. Vorrichtung (202) nach Anspruch 7, **dadurch gekennzeichnet, dass** die Befestigungsmittel ein zweites Verriegelungsorgan (222) umfassen, welches sich im Wesentlichen parallel zum ersten Verriegelungsorgan (222) erstreckt.

9. Vorrichtung (402) nach Anspruch 1, **dadurch gekennzeichnet, dass** die Befestigungsmittel (410) eine Platine (412) umfassen, die auf dem Korpus (8) montiert ist, und mit einer Öffnung (413) versehen ist, wobei diese Öffnung (413) einen im Wesentlichen identischen Querschnitt zu dem Querschnitt einer Öffnung (416) aufweist, welche in der Tür (4) ausgeführt ist; und
dadurch, dass das erste Verriegelungsorgan (422) abnehmbar auf dem Korpus (8) montiert ist und einen Betätigungsabschnitt (422b) aufweist, konzipiert, um durch einen Benutzer derart betätigt zu werden, um das erste Verriegelungsorgan (422) zu verschieben, zwischen:
- einer entriegelten Position, in welcher der Verriegelungsabschnitt (422a) des ersten Verriegelungsorgans (422) in der Lage ist, durch eine Öffnung (413) eingeführt zu werden, welche in der Platine (412) ausgeführt ist und die Öffnung (416), welche in der Tür (4) ausgeführt ist; und
- einer verriegelten Position, in welcher der Verriegelungsabschnitt (422a) des ersten Verriegelungsorgans (422), vorzugsweise um eine Vierteldrehung, um eine Achse (422c) geschwenkt wird, um sich an der Tür (4) anzulegen, und den Korpus (8) an der Tür (4) zu befestigen.

10. Vorrichtung (402) nach Anspruch 9, **dadurch gekennzeichnet, dass** die Achse (422c) angeordnet ist, um sich quer zu der Öffnung (41), welche in der Tür (4) ausgeführt ist und zu der Öffnung (416), welche in der Platine (412) ausgeführt ist, zu erstrecken.

11. Vorrichtung (502) nach einem der Ansprüche 1 bis 3, **dadurch gekennzeichnet, dass** die Tür mit mindestens einer Öffnung versehen ist;
dadurch, dass die Befestigungsmittel (510) eine Platine (512) umfassen, die auf dem Korpus (8) montiert ist, mit mindestens einem Vorsprung (515) in der allgemeinen Form eines ,L' versehen, wobei dieser Vorsprung (515) angeordnet ist, um quer in eine Öffnung (516) der Tür (4) einzugreifen, sich dann im Wesentlichen derart parallel zu der Öffnung (516) der Tür zu verschieben, um sich an der Tür (4) anzulegen; und
dadurch, dass die Befestigungsmittel (510) ein Verriegelungsorgan (522) umfassen, welches auf der Platine (512) montiert ist, wobei das Verriegelungsorgan (522) einen Verriegelungsabschnitt (522a), einen Betätigungsabschnitt (522b) und einen Verbindungsabschnitt aufweist, welcher den Verriegelungsabschnitt (522a) und den Betätigungsabschnitt (522b) verbindet, wobei das Verriegelungsorgan (522) elastisch verformbar ist, zwischen:
- einer entriegelten Position, in welcher der Verriegelungsabschnitt (522a) das Einführen des Vorsprungs (515) in die Öffnung (516) der Tür (4) freigibt; und
- einer verriegelten Position, in welcher der Verriegelungsabschnitt (522a) das Ausbringen des Vorsprungs (515) in der Öffnung (516) der Tür (4) untersagt.

12. Vorrichtung (702) nach einem der Ansprüche 1 bis 3, **dadurch gekennzeichnet, dass** die Befestigungsmittel (710) eine Platine (712) umfassen, die auf dem Korpus (8) montiert und mit einem Loch (713) versehen ist; und
dadurch, dass die Befestigungsmittel (710) eine Schraube (722) umfassen, die in der Lage ist, durch das Loch (713) hindurch, welches in der Platine ausgeführt ist, und das Loch hindurch, welches in der Tür (4) ausgeführt ist, eingeführt und festgeschraubt zu werden, um für die Befestigung des Korpus (8) an der Tür (4) zu sorgen.

13. Bausatz, umfassend:
- mindestens eine Vorrichtung (2; 102; 202; 302; 402; 502; 602; 702; 802; 902) nach einem der Ansprüche 1 bis 12;
- mindestens ein Schutzorgan (901).

14. Bausatz nach Anspruch 13, **dadurch gekennzeichnet, dass** das Schutzorgan (901) ein profiliertes Element (9019) umfasst, das eine Basis (903), eine erste Seitenwand (904) und eine zweite Seitenwand (905) beinhaltet, welche zusammen eine Aufnahme (9021) eingrenzen, welche dazu bestimmt ist, einen Falz (28) eines Karosserieelements (6) aufzunehmen, wobei die erste Seitenwand (904) und/oder die zweite Seitenwand (905) eine bestimmte radiale Elastizität aufweisen, sodass sich die erste Seitenwand (904) und/oder die zweite Seitenwand (905) voneinander entfernen, um den Falz (28) des Karosserieelements (6) in der Aufnahme (9021) anzuordnen, sich dann einander annähern, um für den Halt des Falzes (28) des Karosserieelements (6) in der Aufnahme (9021) des profilierten Elements (9019) zu sorgen.

15. Bausatz nach Anspruch 14, **dadurch gekennzeichnet, dass** eine der Seitenwände (904, 905) des profilierten Elements (9019) weiter mindestens ein überstehendes Element (907) umfasst, das auf Seiten der Aufnahme (9021) des profilierten Elements (9019) ausgerichtet ist.

16. Kraftfahrzeug, welches mindestens eine Tür und ein Karosserieelement (6) beinhaltet, **dadurch gekennzeichnet, dass** es mit einer Vorrichtung (2; 102; 202; 302; 402; 502; 602; 702; 802; 902) nach einem der Ansprüche 1 bis 12 ausgestattet ist.

17. Kraftfahrzeug nach Anspruch 16, **dadurch gekennzeichnet, dass** es weiter mindestens ein Schutzorgan (901) umfasst.

## Claims

1. Device (2; 102; 202; 302; 402; 502; 602; 702; 802; 902) for maintaining a door (4) of a motor vehicle in an ajar position with respect to a body element (6) during the manufacture of this motor vehicle, including:
- a body (8);
- fastening means (10; 110; 210; 310; 410; 510; 610; 710) designed to fasten the body (8) on the door (4) on a fastening area disposed inside the vehicle; comprising at least a first locking member (22; 122; 222; 322; 422; 522; 622) mounted on the body 8, the first locking member (22; 122; 222; 322; 422; 522; 622) having a locking portion (22a; 122a; 222a; 322a; 422a; 522a; 622a) and being movable between:
- an unlocked position in which the locking portion (22a; 122a; 222a; 322a; 422a; 522a; 622a) is likely to pass through an opening formed in the door (4); and
- a locked position in which the locking portion (22a; 122a; 222a; 322a; 422a; 522a; 622a) is likely to bear against the door (4) in order to ensure the fastening of the body (8) to the door (4);
the first locking member (22; 122; 402; 522) having an actuating portion (22b; 122b; 402b; 522b) designed to be actuated by a user so as to move the first locking member (22; 122; 402; 522) between the unlocked position and the locked position, or vice versa;
- a holding member (26; 826) mounted on the body (8) and arranged to bear on a first side of the body element (6) and hold the door (4) in the ajar position; and
- an abutment member (30) mounted on the body (8) and arranged to extend at a distance from the door (4) so as to delimit a space (32) between the abutment member (30) and the door (4), the abutment member (30) being arranged to bear on a second side of the body element (6) and prevent the closing of the door (4);
**characterized in that** the first locking member is pivotally mounted about an axis (22c; 122c) arranged to extend parallel to the opening formed in the door (4); and
**in that** the locking portion (22a; 122a) and the actuating portion (22b; 122b) of the first locking member (22; 122) extend on both sides of the axis (22c; 122c).

2. Device (2; 102; 202; 302; 402; 502; 602 ; 702; 802 ; 902) according to claim 1, **characterized in that** the abutment member (30) takes the form of an arched arm.

3. Device (2; 102; 202; 302; 402; 502; 602; 702; 802; 902) according to any one of claims 1 or 2, **characterized in that** the abutment member (30) is arranged to bear against a rabbet (28) of the body element (6) intended to receive a seal.

4. Device (202; 302; 602) according to any of the preceding claims, **characterized in that** the locking portion (222a; 322a; 622a) of the first locking member (222; 322; 622) has a sliding face forming a ramp against which an edge of the opening formed in the door (4) is likely to slide, so as to allow the passage of the locking portion through this opening; and
**in that** the locking portion (222a; 322a; 622a) of the first locking member has an abutment face likely to bear against the door after passing through said opening, in order to ensure the fastening of the body (8) to the door (4).

5. Device (2; 102; 602; 802; 902) according to any one of the preceding claims, **characterized in that** it includes a blocking member (24; 624) designed to block the first locking member (22; 122; 622) in the locked position.

6. Device (602) according to any one of the preceding claims, **characterized in that** it includes a second locking member (622) removably mounted on the body;
**in that** the second locking member (622) has a locking portion (622a) and an actuating portion (622b) designed to be actuated by a user so as to move the second locking member (622) between:
- an unlocked position in which the locking portion (622a) of the second locking member (622) is likely to pass through the opening formed in the door (4); and
- a locked position in which the locking portion (622a) of the second locking member (622) is likely to bear against the door (4) in order to ensure the fastening of the body (8) to the door (4);
**in that** the first locking member and the second locking member (622) are connected by a connecting portion (622c) which is elastically deformable to form a clamp.

7. Device (202; 302) according to any one of claims 1 or 4, **characterized in that** the first locking member (222; 322) has a connecting portion (222b; 322b) connected to the body (8) and likely to be elastically deformed to move the first locking member (222; 322) between the unlocked position and the locked position.

8. Device (202) according to claim 7, **characterized in that** the fastening means comprise a second locking member (222) extending substantially parallel to the first locking member (222).

9. Device (402) according to claim 1, **characterized in that** the fastening means (410) comprise a plate (412) mounted on the body (8) and provided with an opening (413), this opening (413) having a section which is substantially identical to the section of an opening (416) formed in the door (4); and
**in that** the first locking member (422) is removably mounted on the body (8) and has an actuating portion (422b) designed to be actuated by a user so as to move the first locking member (422) between:
- an unlocked position in which the locking portion (422a) of the first locking member (422) is likely to be engaged through the opening (413) formed in the plate (412) and the opening (416) formed in the door (4); and
- a locked position in which the locking portion (422a) of the first locking member (422) is pivoted about an axis (422c), preferably by a quarter turn, in order to bear against the door (4) and fasten the body (8) to the door (4).

10. Device (402) according to claim 9, **characterized in that** the axis (422c) is arranged to extend transversely to the opening (41) formed in the door (4) and to the opening (416) formed in the plate (412).

11. Device (502) according to any one of claims 1 to 3, **characterized in that** the door is provided with at least one opening;
**in that** the fastening means (510) comprise a plate (512) mounted on the body (8), provided with at least one generally L-shaped protrusion (515), this protrusion (515) being arranged to be engaged transversely in an opening (516) of the door (4) and then translated substantially parallel to the opening (516) of the door, so as to bear against the door (4); and
**in that** the fastening means (510) comprise a locking member (522) mounted on the plate (512), the locking member (522) having a locking portion (522a), an actuating portion (522b) and a connecting portion connecting the locking portion (522a) and the actuating portion (522b), the locking member (522) being elastically deformable between:
- an unlocked position in which the locking portion (522a) allows the engagement of said protrusion (515) in said opening (516) of the door (4); and
- a locked position in which the locking portion (522a) prohibits the disengagement of said protrusion (515) in said opening (516) of the door (4).

12. Device (702) according to any one of claims 1 to 3, **characterized in that** the fastening means (710) comprise a plate (712) mounted on the body (8) and provided with an orifice (713); and
**in that** the fastening means (710) comprise a screw (722) likely to be engaged through the orifice (713) formed in the plate and through the orifice formed in the door (4) and bolted to ensure the fastening of the body (8) to the door (4).

13. kit comprising:
- at least one device (2; 102; 202; 302; 402; 502; 602; 702; 802; 902) according to any one of claims 1 to 12.
- at least one protection member (901).

14. Kit according to claim 13, **characterized in that** the protection member (901) comprises a profile element (9019) including a base (903), a first side wall (904) and a second side wall (905) that delimit together a housing (9021) intended to receive a rabbet (28) of a body element (6), said first side wall (904) and/or said second side wall (905) having a radial elasticity determined so that the first side wall (904) and/or the second side wall (905) move apart from each other to place the rabbet (28) of the body element (6) in said housing (9021) and then get closer to each other to maintain the rabbet (28) of the body element (6) in said housing (9021) of the profile element (9019).

15. Kit according to claim 14, **characterized in that** one of the side walls (904, 905) of the profile element (9019) further comprises at least one protruding element (907) oriented on the side of the housing (9021) of the profile element (9019).

16. Motor vehicle including at least one door and one body element (6), **characterized in that** it is equipped with a device (2; 102; 202; 302; 402; 502; 602; 702; 802; 902) according to any one of claims 1 to 12.

17. Motor vehicle according to claim 16, **characterized in that** it further comprises at least one protection member (901).
